# EUROPÄISCHE PATENTSCHRIFT

(11) **EP 0 865 214 B1**
(45) Veröffentlichungstag und Bekanntmachung des Hinweises auf die Patenterteilung: **19.04.2006**
(21) Anmeldenummer: 98101409.5
(22) Anmeldetag: 27.01.1998
(51) Int. Cl.: H04Q 3/00

(54) **Verfahren zur kunden-individuellen Paketierung von Leistungsmerkmalen in einer Telekommunikationsanlage**
Procedure for the customer-oriented packaging of service features in a telecommunications device
Procédé pour grouper des services personalisés dans un dispositif de télécommunication

(30) Priorität: 28.01.1997 DE 19703041
(43) Veröffentlichungstag der Anmeldung: 16.09.1998
(73) Patentinhaber: SIEMENS AKTIENGESELLSCHAFT, 80333 München (DE)
(72) Erfinder: Helbing, Michael, 81476 München (DE); Magill, Gerald, 86438 Kissing (DE); Blitz, Andre, 81735 München (DE)

(56) Entgegenhaltungen:
- WO-A-94/06071
- DE-A- 4 330 319
- GB-A- 2 254 755

## Beschreibung

Eine Telekommunikationsanlage (im folgenden:"Telekomanlage") nach dem heutigen Stand der Technik besitzt neben dem Aufbau einer Verbindung zwischen dem anrufenden und dem angerufenen Endgerät und der bloßen Daten- oder Sprachübermittlung zwischen diesen Endgeräten zahlreiche weitere Leistungsmerkmale. Diese sind teilweise standardmäßig vorhanden wie beispielsweise "Wahlwiederholung", "Rückfrage" und "Weiterverbinden" (Vermitteln), teilweise werden sie nur auf besondere Kundenanforderung bereitgestellt, wobei der Kunde für diese weiteren Leistungsmerkmale ein Aufgeld zu zahlen hat. Die Leistungsmerkmale sind beispielsweise vermittlungstechnischer Art, wie z.B. "Rufumleitung", "Anklopfen", "Makeln", "Rückruf bei besetzt", "Heranholen", "Sammelruf" und dergleichen. Vielfach sind sämtliche Leistungsmerkmale grundsätzlich im System vorhanden, der Kunde will jedoch nur einen Teil dieser Leistungsmerkmale nutzen und ist auch nur bereit, für den reduzierten Umfang zu bezahlen. Bisher muß dazu eine kundenindividuelle Paketierung, d.h. Freigabe, der Leistungsmerkmale hinsichtlich Typ und Anzahl vorgenommen werden.

Dies hat jedoch den Nachteil, daß ein relativ aufwendiges betriebstechnisches Installationsverfahren durchgeführt werden muß, für das zumeist ausschließlich Kundendienstpersonal befähigt und autorisiert ist. Auch die Fehlersuche und die Beantwortung von Kundenfragen wird dadurch erschwert, da jeweils nachgefragt werden muß, mit welchem Leistungsmerkmalsumfang die Anlage des Kunden arbeitet. Desgleichen ist die nachträgliche Aufrüstung der Anlage beim Zukauf von neuen bzw. weiteren Leistungsmerkmalen mit großem Aufwand verbunden.

Aufgabe der Erfindung ist es, ein Verfahren anzugeben mit dem es möglich ist, den Leistungsumfang einer Telekommunikationsanlage mit geringem Aufwand dem Kundenwunsch entsprechend anpaßbar zu machen und dabei auf einfache Weise eine Verrechnung des von der Anlage zur Verfügung gestellten Leistungsumfangs zu ermöglichen.

Diese Aufgabe wird erfindungsgemäß gelöst durch die Merkmale des Patentanspruches 1. Weitere, vorteilhafte Ausgestaltungen sind in den Unteransprüchen angegeben.

Ein wesentlicher Vorteil des Verfahrens zeigt sich darin, dass der Verkauf von Leistungsmerkmalen in der Form von Paketen möglich wird. Freigeschaltet wird in der Anlage gewissermaßen immer nur ein Leistungsmerkmalspaket, das der Kunde aus einer Vielzahl von angebotenen Leistungsmerkmalspaketen ausgewählt hat und zu dessen Freigabe durch die Anlage er eine anlagen- und paketindividuelle Information vom Hersteller benötigt.

Es wird davon ausgegangen, daß für alle Anlagen des gleichen Typs die selbe Version der Betriebssystem-Software vorgesehen ist, d.h. die Betriebssystem-Software ist nicht kundenspezifisch ausgestaltet. Die Anlage enthält einen Speicher, in dem eine Datei verzeichnet ist, die Daten über die für die betreffende Anlage freigeschalteten, d.h. zur Benutzung berechtigten, Leistungsmerkmale enthält. Diese Daten umfassen dann u.a. die Art der einzelnen Leistungsmerkmale und die Anzahl der erlaubten gleichzeitigen Aktivierungen.

In einer weiteren Ausgestaltung kann die Telekomanlage dem Kundenwunsch äußerst flexibel angepaßt werden. Der Kunde kann innerhalb des gewählten Leistungsmerkmalspakets aus einer Liste von Typen von Leistungsmerkmalen einzelne auswählen und bestimmen, wie oft die gleichzeitige Aktivierung der betreffenden Leistungsmerkmale möglich sein soll. So kann er beispielsweise 50 mal "Rufumleitung" und 10 mal Konferenzschaltung wählen, wobei hier keine Zuordnung bestimmter Leistungsmerkmale zu bestimmten Endgeräten stattfindet, d.h. es kommt nicht auf eine Berechtigung an. Die Datei enthält in diesem Beispiel Daten über die gewählten Leistungsmerkmaltypen und für jeden Typ die zugehörige Anzahl der gleichzeitig möglichen Aktivierungen.

Wird ein bestimmtes Leistungsmerkmal angefordert, so wird durch eine Meldung die Steuerung der Telekomanlage veranlaßt, auf den Datenspeicher für die freigeschalteten Leistungsmerkmale zuzugreifen und zu überprüfen, ob entsprechend den Eintragungen in dieser Datei das angeforderte Leistungsmerkmal freigeschaltet ist, und ob die zugelassene Zahl der gleichzeitig aktivierten Leistungsmerkmale dieser Art in der gesamten Anlage überschritten wird oder nicht. Stellt die Steuerung anhand dieser Abfrage fest, daß das angeforderte Leistungsmerkmal freigeschaltet und die maximale Anzahl der erlaubten gleichzeitigen Aktivierungen nicht überschritten wird, wird dieses Leistungsmerkmal durch die Steuerung aktiviert, anderenfalls wird es nicht aktiviert und eine entsprechende Meldung gesendet.

Dieses Verfahren kann in seiner dynamischen Form realisiert werden, in der es immer dann ausgeführt wird, wenn von einem Endgerät ein Aktivierungsbegehren für ein Leistungsmerkmal an die Anlage übermittelt wird. Dasselbe Verfahren kann aber auch in einer statischen Form mit der die 'Performance' der Anlage nicht belastet wird, implementiert werden. Bei dieser Verfahrensform (auf die im weiteren nicht näher eingegangen wird), wird das Verfahren dann ausgeführt, wenn im Zuge eines betriebstechnischen Einrichtens der Anlage der Leistungsmerkmalsumfang, der dem Kunden zur Verfügung gestellt werden soll, eingestellt wird und dabei nicht mehr als die freigeschalteten, d.h. bezahlten, Leistungsmerkmale tatsächlich freigegeben werden dürfen.

Ein Vorteil des erfindungsgemäßen Verfahrens besteht somit darin, daß alle Endgeräte bezüglich der Anforderung von Leistungsmerkmalen gleichberechtigt sind; die zugelassenen Leistungsmerkmale stehen grundsätzlich an allen Endgeräten zur Verfügung. Nicht berücksichtigt sind bei dieser Betrachtung natürlich die in der Anlage vergebbaren Teilnehmerberechtigungen.

Nach einer weiteren Ausgestaltung ist vorgesehen, daß die Maximalzahl der gleichzeitig zugelassenen Aktivierungen eines Leistungsmerkmaltyps sich zusammensetzt aus einer Basiszahl, die angibt, wie oft von beliebigen Endgeräten dieses Leistungsmerkmal aktiviert werden kann, und einer Reservezahl, die angibt, wie oft von bestimmten, bevorzugten Endgeräten oder Leitungen über die Basiszahl hinaus dieses Leistungsmerkmal zusätzlich aktiviert werden kann. Der Kunde wählt beispielsweise innerhalb des Leistungsmerkmal-Paketes für "Konferenzschaltung" die Basiszahl 5 und die Reservezahl 3. Bei Anforderung des Merkmals "Konferenzschaltung" prüft die Anlage dann, wie oft dieses Merkmal bereits aktiviert ist. Ist es schon 5 mal aktiviert, aber insgesamt noch nicht 8 mal, wird geprüft, ob die Anforderung die bevorrechtigten Endgeräte oder Leitungen betrifft. Ist dies der Fall, wird "Konferenzschaltung" ein weiteres mal aktiviert; sind die bevorrechtigten Endgeräte nicht betroffen, erscheint die Meldung, daß die zugelassene Zahl der gleichzeitigen Aktivierungen überschritten ist.

In diesem Ausführungsbeispiel umfaßt die im Speicher abgelegte Datei Daten über den Leistungsmerkmaltyp, die Basiszahl und die Reservezahl der diesbezüglichen Aktivierungen und die Adressen der für die Reserve bestimmten bevorrechtigten Endgeräte oder Leitungen.

Schließlich kann vorgesehen sein, nicht nach dem Typ der LeiStungsmerkmale zu unterscheiden, so daß nur die Gesamtzahl der gleichzeitig aktivierbaren Leistungsmerkmale relevant ist. Kauft der Kunde z.B. ein Paket mit 50 Leistungsmerkmalen, so stehen alle Leistungsmerkmaltypen zur Verfügung, es darf nur die Gesamtzahl 50 an gleichzeitigen Aktivierungen nicht überschritten werden. Ist in diesem Fall z.B. 45 mal "Rückruf bei besetzt" und 4 mal "Rufumleitung" gleichzeitig aktiviert, so könnte noch ein weiteres Leistungsmerkmal, etwa 1 mal "Heranholen", zusätzlich aktiviert werden. Wollte man in diesem Fall z.B. ein weiteres mal "Rufumleitung" aktivieren, würde ein Fehlersignal erscheinen, da dann die zugelassene Zahl von 50 gleichzeitigen Aktivierungen überschritten würde. Diese letzte Anforderung kann nur dann erfolgreich sein, wenn zuvor eine andere Aktivierung, beispielsweise eine der 45 Aktivierungen von "Rückruf bei besetzt" beendet wurde.

Vorzugsweise hat die Datei über die freigegebenen Leistungsmerkmale der Telekomanlage die Form eines Codewortes. Dieses Codewort wird mit Hilfe eines Algorithmus erzeugt, dessen Eingangsparameter die Seriennummer der Anlage, die Typen der freizuschaltenden Leistungsmerkmale, die Anzahl der für jedes Leistungsmerkmal erlaubten gleichzeitigen Aktivierungen und/oder je nach Anwendungsfall die Maximalzahl aller Aktivierungen, Basis- und Reservezahl sowie die Adressen bevorrechtigter Endgeräte/Leitungen enthält.

Die Seriennummer der Anlage kann in einem gesonderten ROM-Speicher, einem sogenannten "Dongle", in der Anlage abgelegt sein. Anstelle der Seriennummer der Anlage kann im übrigen auch die Seriennummer des Dongels verwendet werden. Der Verschlüsselungsalgorithmus selbst ist geheim und befindet sich auf Rechnern im Herstellerwerk oder auch bei dessen Kundendienst, jedoch nicht in der Telekomanlage selbst. Wird ein bestimmtes Leistungsmerkmal aktiviert, so berechnet die Steuerung mit seiner Systemsoftware durch Entschlüsselung des Codewortes die freigeschalteten Leistungsmerkmale und die Anzahl der erlaubten Aktivierungen.

Die in dem Dongle gespeicherte Seriennummer bzw. die Seriennummer des Dongels wird von der Steuerung in regelmäßigen Zeitabständen abgefragt und mit der Seriennummer verglichen, die sich aus der Entschlüsselung des Codewortes ergibt. Die zu aktivierenden Leistungsmerkmale werden nur bei Übereinstimmung der Ergebnisse freigegeben.

Mit einem gemäß der Erfindung ausgestalteten Verfahren läßt sich eine nachträgliche Aufrüstung der für den Kunden zugelassenen Leistungsmerkmale einfach durchführen. Der Kunde bestellt und bezahlt ein Paket, das die bisherigen und die zusätzlich gewünschten Leistungsmerkmale beinhaltet. Im Werk berechnet der Kundendienst mit dem Verschlüsselungsalgorithmus das neue Codewort. Dieses neue Codewort wird in der Anlage gespeichert. Das Speichern dieses Codewortes in der Anlage läßt sich auch über die Fernwartung durchführen; hierzu wird eine Verbindung zwischen der Telekomanlage und einem Computer des Herstellerwerkes hergestellt und es werden Daten an die Telekomanlage übermittelt, die die Steuerung veranlassen, das ebenfalls zugesendete neue Codewort in dem Speicher für die Leistungsmerkmale einzuschreiben. Da dieses Codewort die Seriennummer der betreffenden Telekomanlage enthält, ist gewährleistet, daß das übersendete Codewort nicht an einer anderen Telekomanlage für die Bereitstellung weiterer Leistungsmerkmale genutzt werden kann.

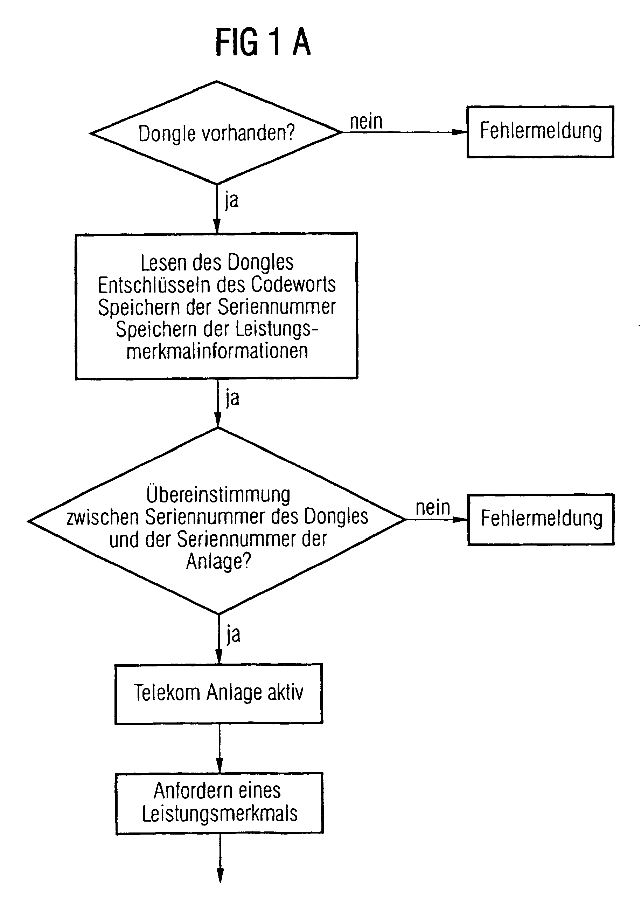

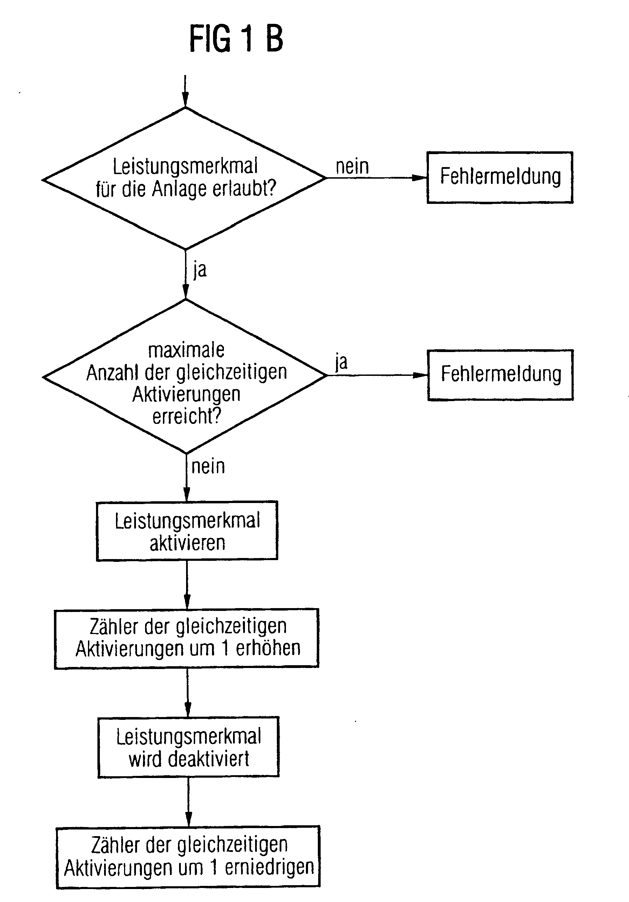

In den Figuren 1A ,1B ist mit einzelnen Funktionsblöcken die Arbeitsweise der Telekomanlage dargestellt. Bei Einschalten der Telekomanlage erfolgt mit der Dongle-Prüfung die Abfrage der Seriennummer. Weiterhin wird das in dem Leistungsmerkmal-Speicher vorhandene Codewort entschlüsselt. Die darin enthaltene Seriennummer wird mit der Seriennummer verglichen, die die Dongle-Prüfung ergeben hat. Ergibt sich hier eine Abweichung, wird von der Steuerung eine Fehlermeldung ausgegeben. Stimmen die Seriennummer nach der Dongle-Prüfung mit der Seriennummer des Codewortes überein, so sind die in diesem Codewort aufgeführten Leistungsmerkmale d.h. die Leistungsmerkmale des durch das Codewort bezeichneten Paketes aktivierbar bzw. freigebbar. Wird nun ein bestimmtes Leistungsmerkmal angefordert, so wird die Steuerung veranlaßt, das Codewort darauf zu überprüfen, ob das angeforderte Leistungsmerkmal in dem bezeichneten Paket aufgeführt ist. Sie überprüft weiter die Anzahl der erlaubten Aktivierungen. Sind alle Abfragen mit ja beantwortet, so erfolgt die Aktivierung des angeforderten Leistungsmerkmals, und der Zähler der aktivierten Leistungsmerkmale wird um 1 heraufgesetzt. Bei Deaktivierung eines Leistungsmerkmals wird der Zähler um 1 herabgesetzt.

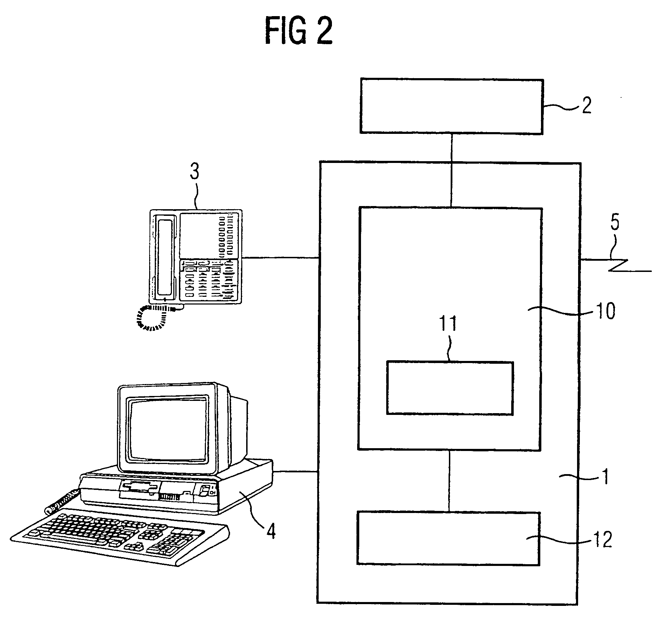

Figur 2 zeigt den prinzipiellen Aufbau der Telekomanlage. Mit 1 ist die Telekomanlage bezeichnet, mit dem Bezugszeichen 2 der Dongle, der eine Seriennummer enthält und auf sie aufgesteckt ist. Die zentrale Steuerung 10 der Anlage enthält ein Prüfmodul 11, welches die voran beschriebenen Abfragen und Vergleiche durchführt. Der Speicher 12 der Anlage 1 enthält die Datei mit den Daten über die freigeschalteten Leistungsmerkmale, Angaben über die maximale Anzahl der gleichzeitig zugelassenen Aktivierungen, und gegebenenfalls über die Adressen der bevorrechtigten Endgeräte oder Leitungen, wenn die zugelassene Zahl der gleichzeitigen Aktivierungen wie oben beschrieben sich aus einer Basisanzahl und einer Reserveanzahl zusammensetzt. Die Endgeräte sind mit 3, 4 bezeichnet und mit 5 die Verbindungsleitungen der Telekomanlage nach außen.

Der Vorteil des erfindungsgemässen Verfahrens besteht in der erheblichen Vereinfachung für die Wartung und Pflege. Weiterhin ist es grundsätzlich auch möglich, daß der Kunde über die Fernwartung neue Leistungsmerkmale anfordern und zur Verfügung gestellt erhalten kann, ohne daß ein Schriftwechsel mit dem Kundendienst notwendig ist. Letzteres kann beispielsweise in der Weise geschehen, daß an einem bestimmten, hierfür vorgesehenen Endgerät ein Modus "Aufrüsten" angewählt werden kann, woraufhin die Anlage über die Fernwartungsleitung mit einem Computer des Kundendienstes bzw. des Herstellerwerkes verbunden wird. Nach Aufnahme der Verbindung wird dann von dem entsprechenden Endgerät der Telekomanlage übermittelt, welches Leistungsmerkmalspaket angefordert wird. Diese Anforderung wird von dem Computer des Kundendienstes aufgenommen, er errechnet aus den bei ihm vorliegenden Kundendaten ein neues Codewort und sendet dies über die Fernwartungsleitung an die Telekomanlage zurück, wo es in dem Speicher für die Leistungsmerkmale abgelegt wird. Die Telekomanlage ist damit aufgerüstet. Der Computer des Kundendienstes meldet die Aufrüstung an die EDV-Anlage der Verrechnungsstellen, wo dann die Daten für die Abrechnung mit dem Kunden entsprechend geändert werden.

## Patentansprüche

1. Verfahren zur kundenindividuellen Paketierung von Leistungsmerkmalen in einer Telekommunikationsanlage, die eine Vermittlungsstelle und daran angeschlossenen Endgeräte und Verbindungsleitungen sowie eine die Anlage gemäß den aktivierten Leistungsmerkmalen steuernde Steuerung (10) als auch einen Speicher (12), in dem Daten über die freigeschalteten Leistungsmerkmale gespeichert sind, aufweist, wobei die Steuerung bei der Anforderung eines Leistungsmerkmals den Speicher (12) abfragt, ob bei Ausführung der betreffenden Anforderung die freigeschaltete Zahl der gleichzeitigen Aktivierungen von Leistungsmerkmalen überschritten wird, und nach dem Ergebnis der Abfrage entscheidet, ob das angeforderte Leistungsmerkmal aktiviert wird.

2. Verfahren nach Anspruch 1, **dadurch gekennzeichnet, dass** die Anforderung eines Leistungsmerkmals im Zuge einer betriebstechnischen Anpassung der Anlage an den vom Kunden gewünschten Leistungsmerkmalsumfang auftritt, wobei die Aktivierung eines Leistungsmerkmals nur im Sinne einer Freigabe des Leistungsmerkmals als für den Kunden verfügbar erfolgt.

3. Verfahren nach Anspruch 1, **dadurch gekennzeichnet, dass** die Anforderung eines Leistungsmerkmals im Zuge eines von einem Endgerät zur Anlage übermittelten Aktivierungsbegehrens des Leistungsmerkmals auftritt.

4. Verfahren nach Anspruch 1 bis 3, **dadurch gekennzeichnet, dass** eine im Speicher (12) enthaltene Datei Daten über die Typen der freigeschalteten Leistungsmerkmale und für jeden Leistungsmerkmaltyp die Maximalzahl der dafür gleichzeitig zugelassenen Aktivierungen enthält.

5. Verfahren nach Anspruch 1 bis 4, **dadurch gekennzeichnet, dass** eine im Speicher (12) enthaltene Datei Daten über die Maximalzahl aller gleichzeitig aktivierbaren Leistungsmerkmale enthält.

6. Verfahren nach Anspruch 4 bis 5, **dadurch gekennzeichnet, dass** die im Speicher (12) enthaltene Datei die Form eines Codewortes besitzt.

7. Verfahren nach Anspruch 6, **dadurch gekennzeichnet, dass** das Codewort die Seriennummer der Anlage oder eines Telekommunikationsanlagen-Dongels enthält.

## Claims

1. Method for customized packaging of service features in a telecommunications device which features an exchange and terminals and connecting lines connected to it as well as a controller (1) controlling the installation in accordance with the activated service features as well as a memory (12) in which data about the enabled service features is stored, with the controller interrogating the memory (12) when a service feature is requested as to whether on execution of the request concerned, the enabled number of simultaneous activations of service features is exceeded, and deciding as a result of the interrogation whether the requested service feature will be activated.

2. Method according to claim 1, **characterized in that** the request for a service feature is made during the course of an operational adaptation of the device to the range of features requested by the customer, with the activation of a service feature only being undertaken in the sense of a release of the service feature as available for the customer.

3. Method according to claim 1, **characterized in that** the request for a service feature is made in the course of an activation request for a service feature submitted by a terminal to the device.

4. Method in accordance with claim 1 to 3, **characterized in that** a file contained in the memory (12) contains data about the types of enabled service features and for each service feature type the maximum number of simultaneously allowed activations for this feature.

5. Method in accordance with claim 1 to 4, **characterized in that** a file contained in the memory (12) contains data about the maximum number of all simultaneously activatable service features.

6. Method in accordance with claims 5 to 6, **characterized in that** the file contained in the memory (12) is in the form of a codeword.

7. Method according to claim 6, **characterized in that** the codeword contains the serial number of the installation or of a telecommunications device dongle.

## Revendications

1. Procédé pour grouper par paquets des services dans un dispositif de télécommunication de façon personnalisée, qui présente un centre téléphonique de commutation et des terminaux et des lignes, qui y sont raccordés, ainsi qu'une commande (10) commandant le dispositif selon les services activés et une mémoire (12), dans laquelle des données sur les services libérés sont mémorisées, la commande interrogeant la mémoire (12), lors de la demande d'un service, pour savoir si le nombre libéré d'activations simultanées de services est dépassé lorsque la demande concernée est exécutée, et décidant, d'après le résultat de l'interrogation, si le service demandé va être activé.

2. Procédé selon la revendication 1, **caractérisé en ce que** la demande d'un service se produit au cours d'une adaptation technique du dispositif à l'éventail de services souhaité par le client, l'activation d'un service étant réalisée, seulement au sens d'une libération du service, comme étant disponible pour le client.

3. Procédé selon la revendication 1, **caractérisé en ce que** la demande d'un service se produit au cours d'un souhait d'activation du service transmis d'un terminal vers le dispositif.

4. Procédé selon les revendications 1 à 3, **caractérisé en ce qu'**un fichier contenu dans la mémoire (12) comprend des données sur les types des services libérés et, pour chaque type de service, le nombre maximal des activations simultanément permises à cet effet.

5. Procédé selon les revendications 1 à 4, **caractérisé en ce qu'**un fichier contenu dans la mémoire (12) comprend des données sur le nombre maximal de tous les services activables simultanément.

6. Procédé selon les revendications 4 à 5, **caractérisé en ce que** le fichier contenu dans la mémoire (12) possède la forme d'un mot de code.

7. Procédé selon la revendication 6, **caractérisé en ce que** le mot de code contient le numéro de série du dispositif ou d'une clé de protection électronique d'un dispositif de télécommunication.
